# EUROPÄISCHE PATENTSCHRIFT

(11) **EP 0 872 502 B1**
(45) Veröffentlichungstag und Bekanntmachung des Hinweises auf die Patenterteilung: **04.06.2003**
(21) Anmeldenummer: 98104967.9
(22) Anmeldetag: 19.03.1998
(51) Int. Cl.: C08G 18/68, C08G 18/08, C08G 18/65, C09D 175/14

(54) **Wasserdispergierte, strahlenhärtbare Polyurethane**
Water-dispersed radiation-curable polyurethanes
Polyuréthannes dispersés dans l'eau, durcissables par radiation

(30) Priorität: 14.04.1997 DE 19715382
(43) Veröffentlichungstag der Anmeldung: 21.10.1998
(73) Patentinhaber: SYNTHOPOL CHEMIE Dr. rer. pol. Koch GmbH & CO. KG, 21614 Buxtehude (DE)
(72) Erfinder: Benecke, Jörg, Dr., 21279 Hollenstedt (DE)
(74) Vertreter: Schupfner, Georg U.

(56) Entgegenhaltungen:
- EP-A- 0 590 889
- EP-A- 0 753 531
- US-A- 4 874 799

## Beschreibung

Die Erfindung betrifft wasserdispergierte, strahlenhärtbare Polyurethane, ein Verfahren zu ihrer Herstellung und ihre Verwendung als oder zur Herstellung von Beschichtungsmitteln gemäß den Patentansprüchen 1 bis 8.

Strahlenhärtbare, wäßrige Polyurethandispersionen gehören allgemein zu den wäßrigen, strahlenhärtbaren Bindemitteln, die bereits seit längerer Zeit bekannt sind. In dem Übersichtsartikel von R. Jentzsch und N. Pietschmann, "Aspekte des Rohstoffeinsatzes in strahlenhärtbaren Wasserlakken", Farbe+Lack, 101. Jahrgang, 6/95, Seiten 523 bis 528, werden sie eingehend beschrieben, können aber bisher in ihren anwendungstechnischen Eigenschaften nicht voll befriedigen. So zeigen Filme, hergestellt aus wäßrigen, strahlenhärtbaren Polyurethandispersionen, Nachteile bezüglich der Chemikalienbeständigkeit und der mechanischen Eigenschaften, z.B. Elastizität, Flexibilität, Härte von beschichteten Oberflächen.

DE 195 25 489 A1 betrifft Polyesteracrylaturethan-Dispersionen auf Basis von hydroxylgruppenhaltigen Polyesteracrylatpräpolymeren, erhältlich durch Polyaddition von A. 40-90 Gew.-% von einem oder mehreren hydroxylgruppenhaltigen Polyesteracrylatpräpolymeren mit einem OH-Gehalt von 40-120 mg KOH/g und B. 0,1-20 Gew.-% einer oder mehrerer mono- und/oder difunktioneller gegenüber Isocyanatgruppen reaktiven Verbindung(en), die kationische, anionische und/oder durch Ethereinheiten dispergierend wirkende Gruppen enthalten, mit C. 10-50 Gew.-% von einem oder mehreren Polyisocyanaten sowie anschließende Umsetzung mit D. 0,1-10 Gew.-%, einem oder mehreren Di-und/oder Polyaminen. DE 195 25 489 A1 beschreibt somit strahlenhärtbare, wäßrige Dispersionen, erhältlich durch Umsetzung von einem oder mehreren hydroxylgruppenhaltigen Polyesteracrylaten (Polykondensationsprodukte von Polycarbonsäuren beziehungsweise deren Anhydriden, Di- undloder höherfunktionellen Polyolen und Acryl- und/oder Methacrylsäure) mit einer oder mehreren gegenüber Isocyanatgruppen reaktiven Verbindung(en), die dispergierend wirkende Gruppen enthalten (zum Beispiel Bis(hydroxymethyl)propionsäure) sowie einem oder mehreren Polyisocyanat(en) (vergleiche a. a. O. Anspruch 1, Seite 2, Zeilen 63-67, Seite 3, Zeilen 7-24). Diese Dispersionen liefern nach der UV-Aushärtung Filme, die stark matt sind und deren Elastizität vielen Anforderungen nicht genügt. Ferner ist es ein Nachteil dieser Dispersionen, daß die daraus hergestellten Lacke relativ hohe Viskositätswerte aufweisen.

In DE 44 34 554 A1 ist ein wasserdispergiertes, strahlungshärtbares Polyurethan, im wesentlichen aufgebaut aus a) organischen Polyisocyanaten, b) Polyesterpolyolen, c) gegebenenfalls von b) verschiedenen Polyolen, d) Verbindungen mit mindestens einer gegenüber Isocyanat reaktiven Gruppe und mindestens einer Carboxylgruppe oder Carboxylatgruppe, e) Verbindungen mit mindestens einer gegenüber Isocyanat reaktiven Gruppe und mindestens einer copolymerisierbaren ungesättigten Gruppe, f) gegebenenfalls von a) bis e) verschiedenen Verbindungen mit mindestens einer gegenüber Isocyanat reaktiven Gruppe, wobei der k-Wert des Polyurethans kleiner als 40 ist und der Gehalt an copolymerisierbaren ungesättigten Gruppen 0,01 bis 0,4 mol/100 g Polyurethan (fest) beträgt und bei der Herstellung des Polyurethan zumindest die Aufbaukomponente a), b) und e) in einer Stufe umgesetzt werden, beschrieben. DE 44 34 554 A1 umfaßt ebenfalls strahlenhärtbare, wäßrige Polyurethandispersionen, im wesentlichen aufgebaut aus organischen Polyisocyanaten, Polyesterpolyolen, Verbindungen mit mindestens einer gegenüber Isocyanatgruppen reaktiven Gruppe und mindestens einer copolymerisierbaren ungesättigten Gruppe (zum Beispiel Ester der Acryl- und/oder Methacrylsäure mit Polyolen), Verbindungen mit mindestens einer gegenüber Isocyanat reaktiven Gruppe und mindestens einer Carboxylgruppe oder Carboxylatgruppe (zum Beispiel Hydroxycarbonsäuren, wie Dimethylolpropionsäure). Die Carboxylgruppen werden vor oder bei der Dispergierung in Wasser, zum Beispiel durch anorganische und/oder organische Basen neutralisiert (vergleiche a. a. O. Anspruch 1, Seite 3, Zeilen 43-50). Die angegebenen Polyurethandispersionen liefern, als Film aufgetragen, nach der Ablüftung des Wassers ohne UV-Lichthärtung noch nicht völlig klebfreie Filme. Auch die Viskosität der damit hergestellten Lacke ist relativ hoch.

Es ist auch erwünscht, daß die Dispersionen der Erfindung in einer hinnehmbaren Zeit physikalisch trocknen, d.h., daß nach Ablüften des Wassers bereits ein trockener, möglichst klebfreier Film mit mechanisch beanspruchbarer Oberfläche vorliegt, bevor dieser dann durch energiereiche Strahlung gehärtet wird. So gibt es, insbesondere auf Oberflächen mit großen Profiltiefen bestimmte Bereiche, die von der energiereichen Strahlung nicht erfaßt werden, so daß auch dort eine physikalische Trocknung einen trockenen und damit klebfreien Film erzeugen kann.

Es ist daher die der Erfindung zugrundeliegende Aufgabe, neue wäßrige, strahlenhärtbare Polyurethandispersionen zur Verfügung zu stellen, die Beschichtungen mit guter Chemikalienbeständigkeit und guten mechanischen Eigenschaften, wie z.B. hoher Elastizität, guter Fülle und gleichzeitig hoher Härte nach der Strahlenhärtung, ergeben. Lacke, die die wasserdispergierten, strahlenhärtbaren Polyurethane der Erfindung enthalten, sollen eine relativ niedrige Viskosität aufweisen. Außerdem sollen diese Dispersionen eine gute Vermischbarkeit, auch ohne zusätzliche mechanische Dispergierung, mit handelsüblichen Photoinitiatoren zeigen. Eine weitere Aufgabe der vorliegenden Erfindung ist es, daß die Filme der aufgetragenen wäßrigen Polyurethandispersionen bereits nach physikalischer Trocknung, also ohne Härtung mit energiereicher Strahlung, klebfreie, schleifbare Filme ergeben, die anschließend strahlenchemisch zu kratzfesten und chemikalienbeständigen Überzügen härten und die bei der eingangs angegebenen Diskussion des Standes der Technik angegebenen Nachteile nicht aufweisen. Ferner sollen Lacke, die die wasserdispergierten, strahlenhärtbaren Polyurethane der Erfindung enthalten, ausgehärtete Filme liefern, die "blockfest" sind. Demgemäß wurden wasserdispergierte, strahlenhärtbare Polyurethane gefunden, ein Verfahren zu ihrer Herstellung sowie ihre Verwendung als Bindemittel in strahlenhärtbaren Beschichtungsmitteln gemäß den Patentansprüchen 1 bis 8.

Gegenstand der Erfindung sind wasserdispergierte, strahlenhärtbare Polyurethane, aufgebaut aus (meth)acryliertem Polyesterpolyol und/oder (meth)acryliertem Polyetherpolyesterpolyol, erhältlich durch Kondensation eines Gemisches bestehend aus:
A)
   a) mindestens 15 Gew.-% aliphatischen und/oder cycloaliphatischen Diolen mit mittleren Molekulargewichten von 40 bis 1000,
   b) mindestens 15 Gew.-% aliphatischen, cycloaliphatischen und/oder aromatischen Dicarbonsäuren oder deren Anhydrid mit 3 bis 20 Kohlenstoffatomen,
   c) mindestens 15 Gew.-% mindestens dreiwertigen Polyolen und/oder alkoxylierten mindestens dreiwertigen Polyolen mit 3 bis 40 "Kohlenstoffatomen und
   d) 15 bis 35 Gew.-% (Meth)Acrylsäure,
      wobei die Gew.-%-Angaben sich für a), b), c) und d) zu 100 Gew.-% ergänzen, bei der Veresterung Veresterungskatalysatoren eingesetzt werden und zur Verhinderung der vorzeitigen Polymerisation der eingesetzten (Meth)acrylsäure sowie ihrer Reaktionsprodukte Inhibitoren eingesetzt werden,
      Weiterverarbeitung des erhaltenen Kondensationsproduktes aus (meth)acryliertem Polyesterpolyol und/oder (meth)acryliertem Polyetherpolyesterpolyol mit Hydroxylzahlen von 140 bis 250 mg KOH/g und Säurezahlen von 0 bis 15 mg KOH/g durch Additionsreaktion in einem Gemisch
B) bestehend aus
   e) 20 bis 40 Gew.-% des (meth)acrylierten Polyesterpolyols und/oder Polyetherpolyesterpolyols, erhalten durch Kondensation des Gemisches A),
   f) 10 bis 30 Gew.-% eines Additionsproduktes von ε-Caprolacton an Hydroxyalkyl(meth)acrylat mit 2 bis 4 Kohlenstoffatomen im Alkylrest und/oder an alkoxyliertem Hydroxyalkyl(meth)acrylat mit 2 bis 18 Kohlenstoffatomen im Alkylrest,
   g) 5 bis 10 Gew.-% 2,2-Bis(hydroxymethyl)alkanmonocarbonsäuren mit insgesamt 5 bis 9 Kohlenstoffatomen der allgemeinen Formel 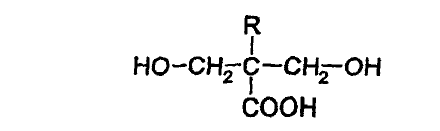 in welcher R für einen Alkylrest mit 1 bis 5 Kohlenstoffatomen steht, und/oder deren Salzen, erhalten durch teilweise oder vollständige Neutralisation mit organischen Aminen und/oder NH₃ und
   h) 35 bis 55 Gew.-% Diisocyanat und/oder Polyisocyanat, wobei die Gew.-%-Angaben sich für e), f), g) und h) zu 100 Gew.-% ergänzen, sowie
C)
   Dispergierung des Additionsproduktes, erhalten durch Umsetzen des Gemisches B) in 50 bis 61 Gew.-% Wasser,
   und
D)
   Kettenverlängerung des Additionsproduktes, erhalten durch Umsetzen des Gemisches B) in der Dispersion C) mit 0,5 bis 3 Gew.-% eines Mono-, Di- und/oder Polyamins, bezogen auf das Gewicht des Additionsproduktes, erhalten durch Umsetzen des Gemisches B).

Die durch Kondensation des Gemisches A) erhältlichen Polyesterpolyole können in Form von (meth)acrylierten Polyestem- und/oder (meth)acrylierten Polyetherpolyesterpolyolen mit Molekulargewichten von 200 bis 2000 vorliegen. Bevorzugt werden hierfür Molekulargewichte von 300 bis 1500.

Bei den (meth)acrylierten Polyesterpolyolen und/oder (meth)acrylierten Polyetherpolyesterpolyolen handelt es sich um Polykondensationsprodukte, basierend auf Polycarbonsäuren bzw. -soweit existent- deren Anhydrid, Di- und höherfunktionellen Polyolen und Acryl- und/oder Methacrylsäure. Die Herstellung von (meth)acrylierten Polyesterpolyolen ist z.B. in US 4206205, DE 40404290, DE 3316592 und DE 3704098 beschrieben.

Als aliphatische und/oder cycloaliphatische Diole (a) seien beispielsweise genannt: Ethylenglycol, Di- und Triethylenglycol, 1,2- und 1,3-Propandiol, Di- und Tripropylenglycol, (Propylenglycole), 1,2-, 1,3- und 1,4-Butandiol, 1,6-Hexandiol, 2-Methylpentandiol, Ethyl-1,4-butandiol, Neopentylglycol, Cyclohexandiol, Dimethylolcyclohexan.

In die Gruppe der aliphatischen, cycloaliphatischen und/oder aromatischen Dicarbonsäuren oder deren Anhydrid (b) gehören beispielsweise Phthalsäure, Isophthalsäure, Terephthalsäure, Tetraoder Hexahydrophthalsäure, 1,2-Cyclohexandicarbonsäure, 1,3-Cydohexandicerbonsäure, 1,4-Cyclohexandicarbonsäure, Bernsteinsäure, Glutarsäure, Adipinsäure, Pimelinsäure, Korksäure, Azelainsäure, Sebacinsäure, Maleinsäure, Fumarsäure, Itaconäure, Citraconsäure.

Als mindestens dreiwertige Polyole (c) werden folgende Hydroxylverbindungen als Beispiele genannt: Trimethylolethan, Trimethylolpropan, Trimethylolbutan, Glycerin. Beispiele für vierwertige Polyole sind die Alkohole Pentaerythritol und Di-Trimethylolpropan, ein sechswertiges Polyol ist z.B. das Di-Pentaerythritol. Weitere einsetzbare mindestens dreifunktionelle Hydroxyverbindungen sind die niedermolekularen Addukte von Ethylen- und/oder Propylenoxid an die vorstehend genannten dreiwertigen Alkohole. Beispiele für diese alkoxylierten Polyol-Handelsprodukte sind die Polyol-Typen TP 08, TP 30, TP 70, TP 200 und TS 30 der Fa. Perstorp sowie die vergleichbaren Typen anderer Hersteller. Beispiel für vierwertige alkoxylierte Alkohole sind die Pentaerythritol-Addukte Polyol PP 50, PP 150, PS 85, ebenfalls von der Fa. Perstorp. Die Buchstaben und Zahlen der vorstehenden Perstorp-Produkte bedeuten: Erstes T ist Basispolyol Trimethylolpropan, erstes P ist Basispolyol Pentaerythritol, zweites P ist primäre OH-gruppe (ethoxyliert), S ist sekundäre OH-gruppe (propoxyliert), 08 ist Alkoxylierungsgrad 0,8 Mol auf 1 Mol Basispolyol, 30 ist Alkoxylierungsgrad 3 Mol auf 1 Mol Basispolyol, 50 ist Alkoxylierungsgrad 5 Mol auf 1 Mol Basispolyol, 70 ist Alkoxylierungsgrad 7 Mol auf 1 Mol Basispolyol, 85 ist Alkoxylierungsgrad 8,5 Mol auf 1 Mol Basispolyol, 150 ist Alkoxylierungsgrad 15 Mol auf 1 Mol Basispolyol, 200 ist Alkoxylierungsgrad 20 Mol auf 1 Mol Basispolyol.

Vorteilhaft ist die Verwendung eines Schleppmittels zum selektiven Auskreisen des Reaktionswassers bei der Kondensation durch Erhitzen des Gemisches auf 60 bis 150 °C zur Herstellung des Kondensationsproduktes A). Hierfür sind zahlreiche Kohlenwasserstoffe und Kohlenwasserstoffgemische sowohl aromatischer als auch aliphatischer und cycloaliphatischer Natur geeignet. Beispiele hierfür sind Toluol, Xylol, n-Hexan, n-Heptan, Cyclohexan, handelsübliche Kohlenwasserstoffgemische wie z.B. Petrolether, Petroleumbenzine, Ligroin und sogenannte Spezialbenzine (Siedegrenzen 70 bis 140 °C).

Die Menge an zuzusetzendem Schleppmittel liegt im Bereich von 5 bis 100 Gew.-%, bei n-Heptan vorzugsweise zwischen 30 und 50 Gew.-% der Einwaage der Polyester-Ausgangsstoffe, nämlich a) bis d).

Beispiele für mitzuverwendende Veresterungskatalysatoren sind starke Säuren wie Schwefelsäure, Phosphorsäure, Pyrophosphorsäure, Methansulfonsäure, p-Toluolsulfonsäure oder Naphthalinsulfonsäure. Die zuzusetzende Menge liegt zwischen 0,1 und 3 Gew.-% der genannten Ausgangsstoffe; für p-Toluolsulfonsäure erwiesen sich 0,5 bis 1,5 Gew.-% als optimal.

Die vorzeitige Polymerisation der (Meth)Acrylsäure sowie ihrer Reaktionsprodukte im Reaktionsgemisch wird überwiegend durch den Zusatz von an sich bekannten Inhibitoren für diesen Zweck verhindert. Beispiele hierfür sind Hydrochinon, Verbindungen vom Typ der Hydrochinonalkylether, des 2,6-Di-tert.-butylphenols, der N-Nitrosamine, der Phenothiazine und der Phosphorigsäureester, welche allein oder auch in Kombination eingesetzt werden können. Je nach Wirksamkeit liegt die zuzusetzende Inhibitormenge zwischen 0,01 und 0,4 Gew.-% der genannten Ausgangsstoffe. Zusätzlich zur Inhibierung durch vorstehend genannte Inhibitoren ist es zweckmäßig, durch oder über das Reaktionsgemisch einen schwachen Strom aus Luft, Sauerstoff oder ein Luft-/Stickstoff-Gemisch zu leiten, um die Polymerisation der freien Acrylsäure und/oder Methacrylsäure vor allem im Brüdensystem zu verhindern.

Das so erhaltene Kondensationsprodukt A) weist nach destillativer Entfernung des Lösungsmittel bzw. Lösungsmittelgemisches, gegebenenfalls im Vakuum, erwünschte Säurezahlen zwischen 0 und 15 mg KOH/g und Hydroxylzahlen zwischen 140 und 250 mg KOH/g (bezogen auf den nichtflüchtigen Anteil) auf, die in Abhängigkeit zu den eingesetzten Rohstoffen, ihren Mengenverhältnissen sowie den Reaktionsbedingungen stehen.

Das bevorzugsteste Additionsprodukt f) ist ein Reaktionsprodukt aus ε-Caprolacton und 2-Hydroxyethylacrylat im Molverhältnis von 1:1. Jedoch sind Additionsprodukte, beschrieben in DE 3027776, durch äquivalente Umsetzung von ε-Caprolacton mit Hydroxyalkyl(meth)acrylaten erhalten, ebenfalls einsetzbar.

Als Beispiele für diese speziellen Hydroxy(meth)acrylate gelten Verbindungen, die mindestens eine, vorzugsweise eine copolymerisierbare ungesättigte Gruppe und mindestens eine, vorzugsweise eine gegenüber ε-Caprolacton reaktive Gruppe aufweisen.

Beispielhaft werden 2-Hydroxyethylacrylat, 2-Hydroxyethylmethacrylat, 2-Hydroxypropylacrylat, 2-Hydroxypropylmethacrylat, 4-Hydroxybutylacrylat, 4-Hydroxybutylmethacrylat genannt; vorzugsweise wird jedoch 2-Hydroxyethylacrylat für die Addition an ε-Caprolacton verwendet. Die Addition erfolgt üblicherweise bei Temperaturen zwischen 60 und 130 °C und in Gegenwart von 0,01 bis 0,15 Gew.-%, bezogen auf das Gewicht des eingesetzten ε-Caprolactons, einer bekannten Organozinnverbindung aus der Gruppe Dibutylzinnoxid, Dioctylzinnoxid, Dibutylzinnglykolat, Dibutylzinnglykolyt, Dibutylzinndiacetat, Dioctylzinndiacetat, Dilaurylzinndiacetat, Dibutylzinndilaurat oder Dibutylzinnmaleat. Die Umsetzung erfolgt zweckmäßigerweise in Abwesenheit eines zusätzlichen Lösungsmittels in der Weise, daß man den Hydroxyalkyl(meth)acrylatester zusammen mit der Organozinnverbindung vorlegt und das ε-Caprolacton langsam zudosiert. Vorteilhaft ist es, wenn man nach beendeter Zudosierung das Reaktionsgemisch noch 2 bis 3 Stunden auf der Reaktionstemperatur hält. Empfehlenswert ist es femer, zur Vermeidung einer thermisch initiierten Polymerisation Luft oder ein Sauerstoff/Stickstoff-Gemisch durch das Reaktionsgemisch zu leiten. Das so erhaltene Addukt erfordert keinerlei Aufarbeitung, sondern kann vielmehr direkt zu dem, gemäß dieser Erfindung beschriebenen Reaktionsgemisch B) zugefügt werden.

Durch die Addition der weiteren Aufbaukomponente g), in diesem Falle 2,2- Bis(hydroxymethyl)-alkanmonocarbonsäure mit insgesamt 5 bis 9 Kohlenstoffatomen, teil- oder vollneutralisiert durch ein organisches Amin und/oder NH₃, werden die Polyurethane selbst dispergierbar, d.h. beim Dispergieren in Wasser werden keine Dispergierhilfsmittel wie Schutzkolloide oder Emulgatoren benötigt.

Beispiele für solche 2,2-Bis(hydroxymethyl)alkanmonocarbonsäuren sind z.B. 2,2-Dimethylolessigsäure, 2,2-Dimethylolpropionsäure, 2,2-Dimethylolbuttersäure, 2,2-Dimethylolpentansäure. Die bevorzugte Dihydroxyalkansäure ist 2,2-Dimethylolpropionsäure.

Die Teilneutralisation oder auch die vollständige Neutralisation der Carboxylgruppe geschieht hierbei durch Zugabe von 70 bis 100 Äquivalent-% eines organischen Amins und/oder NH₃. Zu den organischen Aminen zählen primäre, sekundäre oder vorzugsweise tertiäre Amine wie z.B. Triethylamin.

Als Aufbaukomponente h) werden Diisocyanate und/oder Polyisocyanate verwendet. Als Diisocyanate werden beispielsweise Tetramethylendiisocyanat, Hexamethylendiisocyanat, Octamethylendiisocyanat, Decamethylendiisocyanat, Dodecamethylendiisocyanat, Tetradecamethylendiisocyanat, Trimethylenhexandiisocyanat oder Tetramethylendiisocyanat, cycloaliphatische Diisocyanate, wie 1,4-, 1,3- oder 1,2-Diisocyanatocyclohexan, 4,4'-Di(isocyanatocyclohexyl)-methan, 1-Isocyanato-3,3,5-trimethyl-5-(isocyanatomethyl)cyclohexan (Isophorondiisocyanat) oder 2,4- oder 2,6-Diisocyanato-1-methylcyclohexan oder aromatische Diisocyanate, wie 2,4- und 2,6-Diisocyanatotoluol, Tetramethylxylylendiisocyanat, 1,4-Diisocyantobenzol, 4,4' und 2,4-Diisocyanatodiphenylmethan, p-Xylylendiisocyanat sowie Isoprenyldimethyltoluylendiisocyanat, verwendet. Bei den Isocyanatgruppen aufweisenden Polyisocyanaten handelt es sich insbesondere um einfache Tris-isocyanato-Isocyanurate, welche cyclische Trimere der Diisocyanate darstellen, oder um Gemische mit ihren höheren, mehr als einen Isocyanatring aufweisenden Homologen. Die Isocyanato-lsocyanurate haben im allgemeinen einen NCO-Gehalt von 10 bis 30 Gew.-%, insbesondere 21,5 bis 25 Gew.-%, und eine mittlere NCO-Funktionalität von 3 bis 4,5.

Bei Uretdiondiisocyanaten handelt es sich um cyclische Dimerisierungsprodukte von Diisocyanaten. Die Uretdiondiisocyanate können z.B. als alleinige Komponente oder im Gemisch mit anderen Polyisocyanaten, insbesondere den Isocyanuratgruppen enthaltenen Polyisocyanaten, eingesetzt werden.

Bei den zur Kettenverlängerung bzw. Kettenvemetzung eingesetzten Verbindungen D) handelt es sich z. B. um mindestens difunktionelle Amin-Kettenverlängerer bzw.-vemetzer, welche mindestens zwei primäre, zwei sekundäre oder eine primäre und eine sekundäre Aminogruppe enthalten und deren Wasserstoffatome schneller mit Polyisocyanaten als mit Wasser reagieren. Beispiele hierfür sind Diamine wie Diaminoethan, Diaminopropan, Diaminobutan, Diaminohexan, Amino-3-aminomethyl-3,3,5-trimethyl-cyclohexan (Isophorondiamin), 4,4'-Diaminodi-cyclohexylmethan, 1,4-Diaminocyclohexan, Aminoethylethanolamin, Hydrazin oder Triamine wie Diethylentriamin oder 1,8-Diamino-4-aminomethyloctan.

Die Herstellung der erfindungsgemäßen Additionsverbindung B) erfolgt durch Umsetzung der Komponenten e) bis h) in einer Stufe. Es werden die Komponenten e) bis g) unter ständigem Rühren vorgelegt und die Komponente h) wird kontinuierlich zudosiert. Die Reaktion wird vorzugsweise ohne Verwendung eines organischen Lösungsmittels durchgeführt. Die Reaktionstemperatur liegt im allgemeinen zwischen 20 und 150 °C, vorzugsweise zwischen 40 und 90 °C. Der Reaktionsverlauf kann durch die Abnahme der funktionellen Gruppen, insbesondere der Isocyanatgruppen, verfolgt werden. Die Additionsreaktion ist beendet, sobald im Additionsprodukt von 1,0 bis 6 Gew.-%, vorzugsweise 2,0 bis 3,0 Gew.-% Isocyanat, enthalten sind.

Danach wird das Additionsprodukt in Wasser vorzugsweise im Temperaturbereich von 30 bis 50 °C dispergiert. Der Gehalt des Polymeren im Wasser kann insbesondere zwischen 39 bis 50 Gew.-% liegen, vorzugsweise zwischen 39 bis 41 Gew.-%.

Dieses in Wasser dispergierte Additionsprodukt wird anschließend unter Rühren kontinuierlich mit einem Mono-, Di und/oder Polyamin als Kettenverlängerer versetzt. Bei dieser Umsetzung ist darauf zu achten, daß am Reaktionsende kein Isocyanat mehr vorhanden ist.

Die in der beschriebenen Weise hergestellten, strahlenhärtbaren, wäßrigen Polyurethan-Dispersionen stellen helle, opak und blaustichige Dispersionen dar. Sie ergeben bereits nach physikalischer Trocknung klebfreie Filme und härten durch strahlenchemisch induzierte Polymerisation unter Einwirkung von Elektronen-, Röntgen- oder Gamma-Strahlen oder nach Zusatz geeigneter Photoinitiatoren, beispielsweise Benzo-Amin-Kombinationen, Acyldiphenylphosphinoxiden oder vorzugsweise α-spaltbarer Carbonylverbindungen, wie z.B. Acetophenon-Derivaten, durch UV-Bestrahlung schnell zu harten und hochvemetzten Filmen aus.

Die Verarbeitung zu strahlungshärtbaren Überzugsmitteln, Lacken, Grundierungen, Grundier- und Spritzfüllern erfolgt nach den an sich bekannten Verfahren.

Die erfindungsgemäßen strahlenhärtbaren, wäßrigen Dispersionen können weitere Zusätze, z.B. Pigmente, Farbstoffe, Füllstoffe, Verdickungsmittel und in der Lacktechnologie übliche Hilfsmittel, enthalten. Die Applikation kann nach den in der Lack- und Farbenindustrie üblichen Methoden, wie Walzen, Spritzen, Gießen u.ä., erfolgen. Bevorzugte Substrate sind Holz, holzähnliche Werkstoffe wie Furniere und Spanplatten sowie Papier und Pappe, Glas, Metalle, Textilien, Beton, Stein, Leder, gebrannter Ton, Steingut, Porzellan. Nach dem Auftragen als Überzugsmittel auf einen Träger und Trocknen der erhaltenen Beschichtung wird bei Raumtemperatur oder erhöhter Temperatur bis 50 °C durch geeignete Bestrahlung strahlenchemisch ausgehärtet.

### Beispiele

Das Verfahren der Erfindung wird durch folgende Beispiele verdeutlicht.

### Beispiel 1

### Herstellung des Kondensationsproduktes A1) (acryliertes Polyesterpolyol aus den Komponenten a, b, c und d):

224,9 g Hexandiol-1,6, 96,6 g Trimethylolpropan, 146,0 g Adipinsäure, 144,3 g Acrylsäure, 3,1 g p-Toluolsulfonsäure, 1,7 g Hydrochinonmonomethylether, 0,6 g 2,6-Di-tert.-Butylkresol und 250 n-Heptan setzt man 10 Stunden bei 96 °C unter Rühren, Rückflußkochen und Wasserabscheiden um. Im Wasserstrahlvakuum wird das Lösungsmittel abdestilliert Die OH-Zahl beträgt 170 mg KOH/g, die Säurezahl 1,2 mg KOH/g und die dynamische Viskosität 530 mPas, gemessen nach DIN 53018 bei 23 °C. Das gemessene, mittlere, Molgewicht (Mₙ) beträgt 630, M_{w} beträgt 1540, die errechnete Dispersität ist 2,44.

### Herstellung des Additionsproduktes f1) gemäß Beispiel 3a) aus der DE 30 27 776 (als Komponente f):

In einem mit Rührer, Thermometer, Tropftrichter, Rückflußkühler und regelbarer Heizung versehenen Reaktionsgefäß werden 55,0 g 2-Hydroxyethylacrylat (stabilisiert mit 700 ppm HQMME) und 0,059 g Dibutylzinnoxid vorgelegt. Unter intensivem Durchleiten von Luft wird auf 110 °C erhitzt, und es werden innerhalb von 1 Stunde 45,94 g ε-Caprolacton über den Tropftrichter zudosiert. Es wird noch 3 Stunden unter Rühren auf 110 °C erhitzt, bis eine Viskosität im Bereich von 66-70 Sek. bei 23 °C (DIN EN ISO 2431) erreicht ist.

### Herstellung der erfindungsgemäßen, wäßrigen, strahlenhärtbaren Polyurethan-Dispersion 1:

Zu einem Gemisch aus 200 g des Kondensationsproduktes A1 (e1), 68,4 g des Additionsproduktes f1), 36,0 g 2,2-Bis-(hydroxymethylpropionsäure und 23,9 g Triethylamin werden 214,0 g Isophorondiisocyanat unter Rühren bei Temperaturen von 55 bis 70 °C innerhalb von 3 Stunden zugetropft. Während der Nachreaktion bei der Temperatur von 75 bis 80 °C fällt der NCO-Gehalt auf den konstanten Wert von 2,2 Gew.-%. Anschließend dispergiert man das erhaltene Prepolymer unter starkem Rühren in 749,4 g Wasser bei einer Temperatur von 38 bis 42 °C. Danach wird die erhaltene Dispersion mit einem Gemisch aus 9,6 g Ethylendiamin und 14,3 g Wasser innerhalb von 15 min. bei gleicher Temperatur tropfenweise versetzt. Danach wird noch so lange nachgerührt, bis IR-spektroskopisch kein Isocyanat bei 2270 cm⁻¹ mehr nachweisbar ist.

Nichtflüchtiger Anteil: 40,8 Gew.-%; pH-Wert: 7,3; Viskosität DIN-Auslaufbecher mit 4mm Auslauföffnung bei 20 °C: 23 sek., dynamische Viskosität 30 mPas, gemessen nach DIN 53018 bei 23 °C.

### Beispiel 2

### Herstellung des Kondensationsproduktes A2) (acryliertes Polyesterpolyol aus den Komponenten a, b, c und d):

112,6 g Hexandiol-1,6, 48,3 g Trimethylolpropan, 73,4 g Adipinsäure, 197,0 g ethoxyliertes Pentaerytritol (Polyol® PP 50, OHZ: 630, Fa. Perstorp) 180,5 g Acrylsäure, 5,6 p-Toluolsulfonsäure, 1,5 g Hydrochinonmonomethylether, 0,73 g Hydrochinon, 0,56 g Unterphosphorige Säure, 0,56 g Triphenylphosphit, 0,06 g Phenothiazin und 262 g n-Heptan setzt man 9 Stunden bei 96 °C unter Rühren, Rückflußkochen und Wasserabscheiden um. Im Wasserstrahlvakuum wird das Lösungsmittel abdestilliert. Die OH-Zahl beträgt 143 mg KOH/g, die Säurezahl 3,9 mg KOH/g und die dynamische Viskosität 530 mPas, gemessen nach DIN 53018 bei 23 °C.

### Herstellung des Additionsproduktes f2) gemäß Beispiel 3a) aus der DE 30 27 776 (als Komponente f):

In einem mit Rührer, Thermometer, Tropftrichter, Rückflußkühler und regelbarer Heizung versehenen Reaktionsgefäß werden 55,0 g 2-Hydroxyethylacrylat (stabilisiert mit 700 ppm HQMME) und 0,059 g Dibutylzinnoxid vorgelegt. Unter intensivem Durchleiten von Luft wird auf 110 °C erhitzt, und es werden innerhalb von 1 Stunde 45,94 g ε-Caprolacton über den Tropftrichter zudosiert. Es wird noch 3 Stunden unter Rühren auf 110 °C erhitzt, bis eine Viskosität im Bereich von 66-70 Sek. bei 23 °C (DIN EN ISO 2431) erreicht ist

### Herstellung der erfnindungsgemäßen, wäßrigen, strahlenhärtbaren Polyurethan-Dispersion 2:

Zu einem Gemisch aus 200 g des Kondensationsproduktes A2 (e2), 68,4 g des Additionsproduktes f1), 36,4 g 2,2-Bis-(hydroxymethyl)propionsäure und 23,9 g Triethylamin werden 214,0 g Isophorondiisocyanat unter Rühren bei Temperaturen von 55 bis 80 °C innerhalb von 3 Stunden zugetropft. Während der Nachreaktion bei der Temperatur von 75 bis 80 °C fällt der NCO-Gehalt auf den konstanten Wert von 2,4 Gew.-%. Anschließend dispergiert man das erhaltene Prepolymer unter starkem Rühren in 749,4 g Wasser bei einer Temperatur von 38 bis 42 °C. Danach wird die erhaltene Dispersion mit einem Gemisch aus 9,6 g Ethylendiamin und 14,3 g Wasser innerhalb von 15 min. bei gleicher Temperatur tropfenweise versetzt. Danach wird noch so lange nachgerührt, bis IR-spektroskopisch kein Isocyanat bei 2270 cm⁻¹ mehr nachweisbar ist.

Nichtflüchtiger Anteil: 39,7 Gew.-%; pH-Wert: 8,0; Viskosität DIN-Auslaufbecher mit 4mm Auslauföffnung bei 20 °C: 27 sek., dynamische Viskosität 60 mPas, gemessen nach DIN 53018 bei 23 °C.

### Beispiel 3

### Lackanwendungstechnische Prüfung der erfindungsgemäßen, wäßrigen, strahlenhärtbaren Polyurethan-Dispersion:

Der wäßrigen, strahlenhärtbaren Polyurethan-Dispersion aus Beispiel 1 wurde 2 Gew.-% des Photoinitiators 2-Hydroxy-2-methyl-1-phenyl-1-propanon (Darocur ® 1173, Ciba Geigy) zugesetzt. Dieser wäßrige Lack wurde in einer Schichtdicke von 120µm auf einer Glasplatte aufgetragen, bei 50 °C 5 min getrocknet und nach 1 Stunde die Pendelhärten (König, DIN 53157) bestimmt. In gleicher Weise wurde wieder verfahren, jedoch nach der Ablüftung des Wassers in 5 min. bei 50 °C wurde eine UV-Lichthärtung (100 W/cm) bei unterschiedlichen Bandgeschwindigkeiten (5 bis 30 m/min) durchgeführt. Die Ergebnisse der Pendelhärteprüfungen sind in der Tabelle 1 wiedergegeben.

### Beispiel 4

### Prüfung der Lackoberfläche auf Fülle, Elastizität, Schleifbarkeit und Chemikalienbeständigkeit:

Für die Beurteilung der Lackoberfläche wurde ein seidenglänzender Klarlack rezeptiert. Es wurden 75 g der erfindungsgemäß hergestellten, wäßrigen, strahlenhärtbaren Polyurethan-Dispersion aus Beispiel 1 mit 2 g Photoinitiator 2-Hydroxy-2-methyl-1-phenyl-1-propanon (Darocur® 1173, Fa. Ciba Geigy), 0,3 g Surfynol® 104 E (Fa. Air Products), 0,3 Byk ® 346 (Fa. Byk Chemie), 0,1 g Disperse Ayd ® W22 (Fa. Daniel-Products), 3,0 g Aquacer 513 (Fa. Byk Cera), 2 g Mattierungsmittel TS 100 (Fa. Degussa) und 5 g Verdickungsmittel Acrysol® RM 8 (Fa. Rohm&Haas) vermischt. Der Lack wurde mit Wasser auf eine Auslaufzeit von 40 sek. im DIN-Auslaufbecher mit Auslaufdurchmesser von 4mm bei 20 °C eingestellt und mit ca. 70 g/m² auf einem Träger aus Holz (Nußbaum) aufgesprüht. Nach einer Trocknungszeit von 5 Minuten bei 50 °C wird mit UV-Bestrahlung (100 W/cm, 5 m/min) gehärtet und die Oberfläche geschliffen. Hierauf folgt ein zweiter Arbeitsgang mit gleicher Formulierung und gleicher Vorgehensweise. Die fertig applizierten Lackoberflächen wurden nach Aussehen (Fülle), Verlauf, Elastizität, Schleifbarkeit und Chemikalienbeständigkeit nach DIN 68861 - 1B [(Prüfmittel: 48 Gew.-% Ethanol, Aceton, 10 Gew.-% Ammoniak, Kaffee, Wasser, Rotwein und Dibutylphthalat (Weichmacher)] beurteilt und geprüft. Die Ergebnisse dieser anwendungstechnischen Prüfungen sind in der folgenden Tabelle 1 aufgeführt.

**Tabelle 1**

| Pendelhärte nach physikalischer Trocknung DIN 53157) | 43 sek. |
|---|---|
| Pendelhärte nach physikalischer Trocknung und UV-Härtung (DIN 53157) | |
| 5 m/min | 175 |
| 10 m/min | 147 |
| 15 m/min | 134 |
| 20 m/min | 113 |
| 25 m/min | 111 |
| 30 m/min | 107 |

| Chemikalienbständigkeit (DIN 68861-1B) des Lackes für Prüfmittel : | |
|---|---|
| Wasser | i.O |
| 48 % Ethanol | i.O |
| Aceton | i.O |
| 10 % Ammoniak | i.O |
| Kaffee | i.O |
| Rotwein | i.O |
| Dibutylphthalat | i.O |
| Elastizität (Spanprobe) | sehr elastisch |
| Schleifbarkeit (Körnung 320) | sehr gut |
| Verlauf | sehr gut |

Die in Tabelle 1 gemessenen Pendelhärten nach physikalischer Trocknung zeigten bereits das Vorliegen einer mechanisch beanspruchbaren Oberfläche an.

Die in Tabelle 1 gemessenen Pendelhärten nach physikalischer Trocknung und strahlenchemischer UV-Härtung sowie die ermittelten Chemikalienbeständigkeiten (DIN 68861-1B) der Lackfilme zeigen deutlich, daß die eingangs der Beschreibung angegebenen Aufgaben der Erfindung gelöst worden sind.

### Beispiel 5

### Blockfestigkeitsprüfung:

Auch die Erfüllung der Anforderungen an die sog. "Blockfestigkeit" (vergl. Fenster und Fassade 2/91, S. 45 u. 46; ISO 4622 second edition 1992-12-15)ist für strahlenhärtende, wäßrige Polyurethandispersionen eine wichtige Eigenschaft. Die Prüfung sollte immer dann durchgeführt werden, wenn nicht bekannt ist, ob beschichtete Flächen, die sich berühren, zum Verblocken neigen.

Zur Beurteilung der Lackoberfläche wurde mit der Dispersion aus Beispiel 2 ein weiterer wäßriger Lack hergestellt. Hierzu wurde 1,5 Gew.-% des Photoinitiators Irgacure 500 (Ciba Spezialitätenchemie) zugesetzt. Dieser Lack wurde in einer Schichtdicke von 150 µm auf zwei angeschliffenen Melaminfolien aufgebracht. Die Melaminfolien sind auf einer ca. 1cm dicken Pressspanplatte als Trägermaterial verpresst. Durch Trocknung bei 50 °C innerhalb von einer Stunde wird das Wasser abgelüftet. Es folgte eine UV-Lichthärtung (100 W/cm) der beiden Filme bei einer Bandgeschwindigkeit von 5 m/min. Danach wurden die beiden Lackoberflächen nach ISO 4622 aufeinander verpreßt. Hierzu dienten 4 Schraubzwingen, die kräftig an den vier Ecken der Trägerplatten verschraubt wurden. Der Verpresszeit betrug 15 Stunden, die Verpresstemperatur 50 °C. Nach der abgelaufenen Zeit wunden die Schraubzwingen gelöst. Die beiden Filmoberflächen ließen sich leicht voneinander ohne Schäden (lose anliegend) entfernen. Damit ist die Blockfestigkeit des ausgehärteten Films nachgewiesen worden.

### Beispiel 6

### Veträglichkeitsprüfungen:

Zur Beurteilung der Vermischbarkeit und Verträglichkeit mit handelsüblichen Photoinitiatoren wurden 98 g der erfindungsgemäß hergestellten, wäßrigen Polyurethan-Dispersion 1 mit jeweils 2 g eines der in Tabelle 2 aufgeführten Photoinitiatoren per Hand verrührt (Lackmesser). Die erhaltenen jeweiligen Mischungen wurden auf Glas mit 120 µm Schichtdicke gerakelt, und nach Ablüften des Wassers wurden die Filme optisch beurteilt Außerdem wurden nach 24 Stunden die Vermischungen auf Homogenität (Absetzverhalten) geprüft.

**Tabelle 2**

| Photoinitiator | Einarbeitbarkeit | Aussehen des Films | Absetzverhalten (24 Std). |
|---|---|---|---|
| Irgacure® 500 ¹ | gut | klar | nein |
| Irgacure® 184 ¹ | sehr gut | klar | nein |
| Darocur® 1173 ¹ | sehr gut | klar | nein |
| Darocur® 4265 ¹ | gut | klar | nein |
| Benzophenon | gut | klar | nein |
| Lucirin® TPO ² | gut | klar | nein |
| CGI-1700 ¹ | gut | klar | nein |
| CGI-1800 ¹ | schlecht | fester Rückstand | ja |
| Esacure® KIP 100 F ³ | gut | klar | nein |
| Esacure® KIP EM ³ | sehr gut | klar | nein |
| Esacure® TZT ³ | gut | klar | nein |

| | | | |
|---|---|---|---|
| ¹ Ciba Spezialitätenchemie | | | |
| ² BASF AG | | | |
| ³ Lamberti | | | |

Tabelle 2 verdeutlicht die Möglichkeit der Einarbeitbarkeit von handelsüblichen Photoinitiatoren, den Einfluß derselben auf die Filmeigenschaften sowie das Absetzverhalten im Lackansatz gemäß der Erfindung.

### Beispiel 7 sowie 2 Vergleiche

### Viskositätsvergleichsuntersuchungen an Lacken, die als Bindemittel wasserdispergierte, strahlenhärtbare Polyurethane enthalten:

In der folgenden Tabelle 3 sind die Lackrezepturen und Viskositätswerte angegeben.

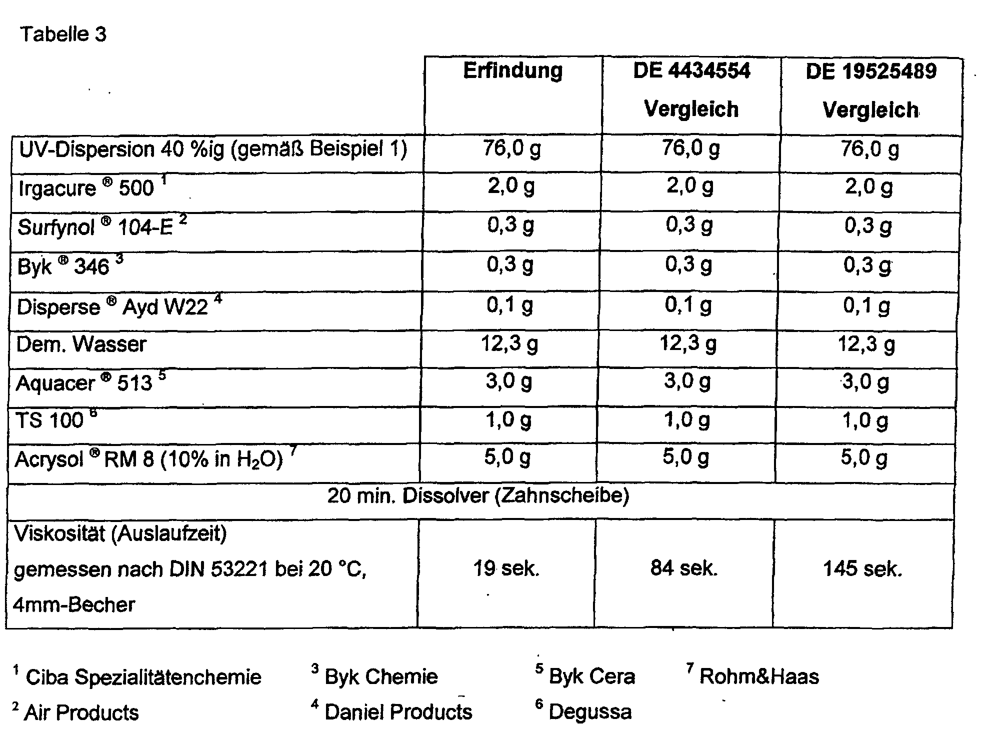

### Beispiel 8 sowie 2 Vergleiche

Prüfung von 120 µm Naßfilmen mit den Lacken gemäß Tabelle 3 nach Ablüften des Wassers in 5 Minuten bei 50 °C auf Klebrigkeit (nach physikalischer Trocknung):

**Tabelle 4**

| **Erfindung** | **DE 4434554** | **DE 19525489** |
|---|---|---|
| nicht klebrig | klebrig | leicht klebrig |

Das Ergebnis der Filmprüfungen des Produktes gemäß DE 4434554 A1 bezüglich der Klebrigkeit wird auch dort auf Seite 4, Zeilen 65 bis 66 bestätigt, wo angegeben ist, daß die Polyurethane schon nach dem physikalischen Trocknen eine weitgehend klebfreie, trockene Beschichtung liefern. Der Vorteil der aus den erfindungsgemäßen Polyurethandispersionen erhaltenen Lackfilme, ergibt sich daraus, daß diese ohne Härtung bereits klebfrei und schleifbar vorliegen.

### Beispiel 9

### Wässriger UV-Klarlack, seidenglänzend:

Ein Gemisch aus 75 g der Polyurethandispersion gemäß Beispiel 1wird mit 1,0 g Irgacure® 500 (Ciba Spezialitätenchemie), 0,3 g Surfynol® 104 E (Air Products), 0,3 g Byk® 346 (Byk Chemie), 0,1 g Disperse Ayd® W 22 (Daniel-Products), 3,0 g Aquacer® 513 (Byk Cera), 2,0 TS 100 (Degussa), 5,0 g Acrysol ® RM 8 (1/10 in Wasser) (Rohm & Haas) wird 20 min. im Dissolver (Zahnscheibe) homogenisiert. Mit 13,3 g demineralisiertem Wasser wird auf 100,0 g Gesamtgewicht des UV-Klarlackes eingestellt Dieser Lack hat eine Auslaufzeit von 30 sek. im 4 mm-Auslaufbecher bei 20 °C. Wie in Beispiel 4 angegeben, wurden Filme auf Nußbaumholz aufgetragen und mit UV-Bestrahlung gehärtet. Die ausgehärteten Filme wurden nach DIN 68861-1B geprüft. Es wurden ebenfalls die in Fortsetzung Tabelle 1 angegebenen Prüfergebnisse erzielt Bemerkenswert ist, daß in diesem Beispiel im Gegensatz zum Beispiel 4 sowie Beispiel 7, die Menge des Photoinitiators halbiert vorliegt.

Femer wurde der Lack gemäß Beispiel 9 im Beispiel 10 eingesetzt.

### Beispiel 10

### Wäßriger UV-Weißlack, seidenglänzend:

Ein Gemisch aus 24,6 g demineralisiertem Wasser, 0,5 g Bentone® EW (Kronos), 3,0 g Propylenglycol, 0,3 g Hydropalat ® 3204 (Henkel AG), 0,3 g Disperbyk® 184 (Byk Chemie), 65,0 g Kronos® 2190 (Kronos Titan), 6,0 g Disperbyk® 130 (Byk Chemie), 0,3 g Surfynol® 104 E (Air Products) wird 30 min. im Dissolver (Zahnscheibe) zu einer Pigmentpaste homogenisiert.

15,0 g dieser weißen Paste werden dann mit 84,0 g des wäßrigen Klarlackes, gemäß Beispiel 9 und 1,0 g Irgacure 1700 (Ciba Spezialitätenchemie) 10 min. durch Rühren gut vermischt.

Dieser Weißlack wurde mit Wasser auf eine Auslaufzeit von ca.25 sek. im DIN-Auslaufbecher mit Auslaufdurchmesser von 4mm bei 20 °C eingestellt und mit ca. 70 g/m² auf einem Träger aus Holz (Kiefernholz) aufgesprüht. Nach einer Trocknungszeit von 5 Minuten bei 50 °C wird mit UV-Bestrahlung (je 100 W/cm, Hg-Hochdruck und Ga-dotiertem Hg-Hochdruckstrahler, 5 m/min) gehärtet und die Oberfläche geschliffen. Hierauf folgt jeweils ein zweiter und dritter Arbeitsgang mit gleicher Formulierung und gleicher Vorgehensweise. Die fertig applizierten Lackoberflächen wurden nach Aussehen (Fülle), Verlauf, Elastizität, Schleifbarkeit und Chemikalienbeständigkeit nach DIN 68861 - 1B [Prüfmittel: 48 Gew.-% Ethanol, Aceton, 10 Gew.-% Ammoniak, Kaffee, Wasser, Rotwein und Dibutylphthalat (Weichmacher)] beurteilt und geprüft. Die Ergebnisse dieser anwendungstechnischen Prüfungen sind in der folgenden Tabelle 5 aufgeführt.

**Tabelle 5**

| **Prüfmittel** | **Ergebnis** | **Bemerkung** |
|---|---|---|
| Essigsäure (5 %) | 0 | |
| Reinigungslösung | 0 | |
| Ethanol (48 %) | 0 | |
| Benzin 100/140 | 0 | |
| Aceton | 0 | |
| Ethyl-/Butylacetat (1:1) | 0 | |
| Ammoniak (10 %) | 0 | |
| Natriumcarbonat (10 %) | 0 | |
| Kaffee | 2 | leicht braun |
| Cola | 0 | |
| Demineralisiertes Wasser | 0 | |
| Butter | 0 | |
| Lippenstift | 0 | |
| Senf, mittelscharf | 2 | leicht gelb |
| Rotwein | 2 | leicht rosa |
| Palatinol C® (40 °C) | 0 | |

Für die Fälle, daß die Weißlackierung durch Kaffee, Senf und Rotwein keine Verfärbung aufweisen darf, ist dies leicht durch eine Decklackierung mit dem Klarlack gemäß Beispiel 9 erzielbar.

### Beispiele 11 und 12 sowie 2 Vergleiche

### Elastizitätsprüfungen der erfindungsgemäßen, wäßrigen, strahlenhärtbaren Polyurethan-Dispersion:

100 g der Dispersionen gemäß den Beispielen 1 und 2 und auch zwei Vergleichsbeispielen gemäß DE 4434554 und DE 19525489 wurden mit 2,0 g eines Photoinitiators (Irgacure® 500) versetzt. Die Lacke wurden in eine Teflonform gegossen und bei 23 °C vier Tage getrocknet (Lufttrocknung). Anschließend wurden diese Klarlackfilme strahlenchemisch gehärtet (2 mal 4 m/min., 1 UV-Lampe:1000W/cm). Die Trockenfilmdicke der von der Form gelösten Streifen betrug 0,9 bis 1,1 mm, die Breite zwischen 18 und 20 mm. Jeweils 5 Streifen wurden in einer Prüfmaschine 010TND der Fa. Zwick geprüft und der Zug-Dehn-Versuch (Reißdehnung, Zugfestigkeit) nach DIN 53 455 durchgeführt. Die Ergebnisse sind in Tabelle 6 angegeben.

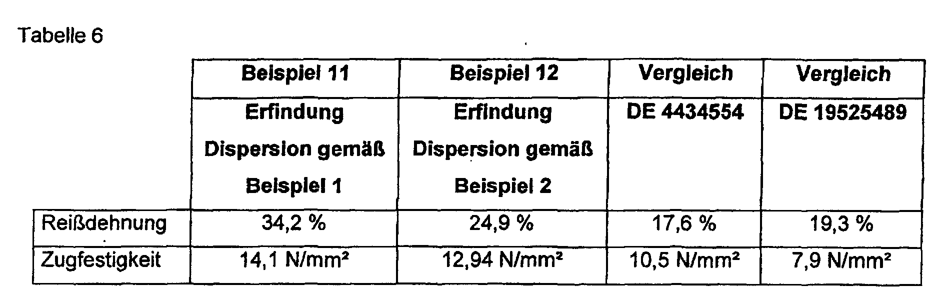

Das Ergebnis dieser Elastizitätsprüfungen zeigt eindeutig, daß die Reißdehnung und Zugfestigkeit der erfindungsgemäßen ausgehärteten Filme signifikant verbessert vorliegen.

## Patentansprüche

1. Wasserdispergierte, strahlenhärtbare Polyurethane, aufgebaut aus (meth)acryliertem Polyesterpolyol und/oder (meth)acryliertem Polyetherpolyesterpolyol, erhältlich durch Kondensation eines Gemisches bestehend aus:
A)
a) mindestens 15 Gew.-% aliphatischen und/oder cycloaliphatischen Diolen mit mittleren Molekulargewichten von 40 bis 1000,
b) mindestens 15 Gew.-% aliphatischen, cycloaliphatischen und/oder aromatischen Dicarbonsäuren oder deren Anhydrid mit 3 bis 20 Kohlenstoffatomen,
c) mindestens 15 Gew.-% mindestens dreiwertigen Polyolen und/oder alkoxylierten, mindestens dreiwertigen Polyolen mit 3 bis 40 Kohlenstoffatomen und
d) 15 bis 35 Gew.-% (Meth)Acrylsäure,
wobei die Gew.-%-Angaben sich für a), b), c) und d) zu 100 Gew.-% ergänzen, bei der Veresterung Veresterungskatalysatoren eingesetzt werden und zur Verhinderung der vorzeitigen Polymerisation der eingesetzten (Meth)acrylsäure sowie ihrer Reaktionsprodukte Inhibitoren eingesetzt werden,
Weiterverarbeitung des erhaltenen Kondensationsproduktes A) aus (meth)acryliertem Polyesterpolyol und/oder methacryliertem Polyetherpolyesterpolyol mit Hydroxylzahlen von 140 bis 250 mg KOH/g und Säurezahlen von 0 bis 15 mg KOH/g durch Addition In einem Gemisch
B) bestehend aus:
e) 20 bis 40 Gew.-% des (meth)acrylierten Polyesterpolyols und/oder methacrylierten Polyetherpolyesterpolyols, erhalten durch Kondensation des Gemisches A),
f) 10 bis 30 Gew.-% eines Additionsproduktes von ε-Caprolacton an Hydroxyalkyl(meth)acrylat mit 2 bis 4 Kohlenstoffatomen Im Alkylrest und/oder an alkoxyliertem Hydroxyalkyl(meth)acrylat mit 2 bis 18 Kohlenstoffatomen im Alkylrest,
g) 5 bis 10 Gew.-% 2,2-Bis(hydroxymethyl)alkanmonocarbonsäuren mit insgesamt 5 bis 9 Kohlenstoffatomen der allgemeinen Formel 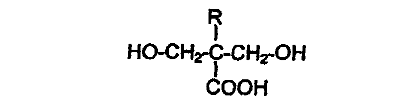 in welcher R für einen Alkylrest mit 1 bis 5 Kohlenstoffatomen steht, und/oder deren Salzen, erhalten durch teilweise oder vollständige Neutralisation mit organischen Aminen und/oder NH₃ und
h) 35 bis 55 Gew.-% Diisocyanat und/oder Polyisocyanat, wobei die Gew.-%-Angaben sich für e), f), g) und h) zu 100 Gew.-% ergänzen,
sowie
C)
Dispergierung des Additionsproduktes (Prepolymers), erhalten durch Umsetzung des Gemisches B), in 50 bis 61 Gew.-% Wasser
und
D)
Kettenverlängerung des Additionsproduktes (Prepolymers), erhalten durch Umsetzung des Gemisches B) in der Dispersion C) mit 0,5 bis 3 Gew.-% eines Mono-, Di- und/oder Polyamins, bezogen auf das Gewicht des Additionsproduktes (Prepolymers), erhalten durch Umsetzung des Gemisches B).

2. Wasserdispergierte, strahlenhärtbare Polyurethane gemäß Anspruch 1, wobei die durch Umsetzung des Gemisches A) erhaltenen (meth)acrylierten Polyester- und/oder (meth)acrylierten Polyetherpolyesterpolyole Molekulargewichte von 200 bis 2000 aufweisen.

3. Wasserdispergierte, strahlenhärtbare Polyurethane gemäß einem der Ansprüche 1 bis 2, wobei das Additionsprodukt f) ein Reaktionsprodukt aus ε-Caprolacton und 2-Hydroxyethylacrylat im molaren Verhältnis von 1,5 : 1 bis 1 : 3 ist.

4. Wasserdispergierte, strahlenhärtbare Polyurethane gemäß einem der Ansprüche 1 bis 3, wobei die 2,2 2,2-Dimethylolpropionsäure g) mit 70 bis 100 Äquivalent-% Triethylamin teil- bzw. neutralisiert vorliegt.

5. Verfahren zur Herstellung von wasserdispergierten, strahlenhärtbaren Polyurethanen gemäß Anspruch 1, **dadurch gekennzeichnet, daß**
A) ein Gemisch bestehend aus:
a) mindestens 15 Gew.-% aliphatischen und/oder cycloaliphatischen Diolen mit mittleren Molekulargewichte von 40 bis 1000,
b) mindestens 15 Gew.-% aliphatischen und/oder cycloaliphatischen und/oder aromatischen Dicarbonsäuren oder deren Anhydrid mit 3 bis 20 Kohlenstoffatomen,
c) mindestens 15 Gew.-% mindestens dreiwertigen Polyolen und/oder alkoxylierten, mindestens dreiwertigen Polyolen mit 3 bis 40 Kohlenstoffatomen und
d) 15 bis 35 Gew.-% (Meth)Acrylsäure, wobei die Gew.-%-Angaben sich für a), b), c) und d) zu 100 Gew.-% ergänzen, darstellt, wobei
zur Verhinderung der vorzeitigen Polymerisation der eingesetzten (Meth)acrylsäure sowie ihrer Reaktionsprodukte Inhibitoren eingesetzt werden,
durch Erhitzen unter Wasserentfernung kondensiert wird, bis das Kondensationsprodukt mindestens mit einer Säurezahl von 0 bis 15 mg KOH/g und einer Hydroxylzahl von 140 bis 250 mg KOH/g vorliegt und die organische Wasserschleppmittel enthaltende Kondensatlösung durch Destillation auf einen nichtflüchtigen Anteil von mindestens 94 Gew.-% gebracht wird, wobei die Veresterung mit Hilfe eines Veresterungskatalysators erfolgt, danach wird das erhaltene (meth)acrylierte Polyesterpolyol und/oder (meth)acrylierte Polyetherpolyesterpolyol in einem Gemisch
B) bestehend aus:
e) 20 bis 40 Gew.-% des (meth)acrylierten Polyesterpolyols und/oder methacrylierten Polyetherpolyesterpolyols, erhalten aus dem Gemisch A),
f) 10 bis 30 Gew.-% eines Additionsproduktes von ε-Caprolacton an Hydroxyalkyl(meth)acrylat mit 2 bis 4 Kohlenstoffatomen im Alkylrest und/oder an alkoxyliertem Hydroxyalkyl(meth)acrylat mit 2 bis 18 Kohlenstoffatomen im Alkylrest,
g) 5 bis 10 Gew.-% 2,2-Bis(hydroxymethyl)-alkanmonocarbonsäuren mit insgesamt 5 bis 9 Kohlenstoffatomen der allgemeinen Formel 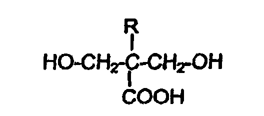 in welcher R für einen Alkylrest mit 1 bis 5 Kohlenstoffatomen steht, und/oder deren Salzen, erhalten durch teilweise oder vollständige Neutralisation mit organischen Aminen und/oder NH₃,
auf eine Reaktionstemperatur zwischen 20° und 150 °C, vorzugsweise zwischen 40° und 90 °C, bringt und zu diesem Ansatz werden unter Aufrechterhaltung der Reaktionstemperatur und unter ständiger Bewegung
h) 35 bis 55 Gew.-% Diisocyanat und/oder Polyisocyanat allmählich zugefügt und so lange auf Reaktionstemperatur gehalten, bis der Gehalt an freien Isocyanatgruppen konstant ist und einen Wert von 1 bis 4 Gew.-% erreicht hat, wobei die Gew.-%-Angaben sich für e), f),
g) und h) zu 100 Gew.-% ergänzen und das erhaltene Polyurethan-Reaktionsprodukt (Prepolymer) allmählich unter gutem Rühren in auf 30 bis 50 °C erwärmtem Wasser dispergiert wird, wobei die Wassermenge so bemessen vorliegt, daß sie 58 bis 62 Gew.-% beträgt; danach wird die erhaltene Dispersion mit 0,5 bis 3 Gew.-% eines Mono, Dl-und/oder Polyamins, bezogen auf den Festkörpergehalt der Dispersion, allmählich unter heftigem Rühren im Temperaturbereich von 30 bis 50 °C zur Kettenverlängerung des dispergierten Additionsproduktes (Prepolymers) zugegeben und auf Reaktionstemperatur gehalten, bis der Gesamtgehalt an freien lsocyanatgruppen höchstens 0,05 Gew.-% beträgt.

6. Verwendung der wasserdispergierten Polyurethane gemäß einem der Ansprüche 1 bis 4 als Bindemittel in lichthärtenden Beschichtungsmitteln.

7. Verwendung nach Anspruch 6 für die Beschichtung von Holz, holzähnlichen Werkstoffen wie Furnieren und Spanplatten sowie Papier und Pappe, Glas, Metallen, Textilien, Beton, Stein, Leder, gebranntem Ton, Steingut, Porzellan.

8. Verwendung der wasserdispergierten Polyurethane als Bindemittel nach Anspruch 6 oder 7 zur Herstellung von Überzügen, Grundierungen, Grundler- und Spritzfüllern durch Auftragen eines Lackes auf Basis der wasserdispergierten Polyurethane sowie gegebenenfalls üblichen Zusätzen auf einen Träger und Trocknen der erhaltenen Lackschicht und Bestrahlung bei Raumtemperatur oder erhöhter Temperatur bis 50 °C zur strahlenchemischen Aushärtung.

## Claims

1. A water-dispersed, radiation-curing polyurethanes, synthesized from (meth)acrylated polyester polyol and/or (meth)acrylated polyether polyester polyol, obtainable by condensation of a mixture consisting of:
A)
a) at least 15 weight-percent of aliphatic and/or cycloaliphatic diols having average molecular weights from 40 to 1000,
b) at least 15 weight-percent of aliphatic, cycloaliphatic, and/or aromatic dicarboxylic acids or their anhydrides having 3 to 20 carbon atoms,
c) at least 15 weight-percent of at least trivalent polyols and/or alkoxylated, at least trivalent, polyols having 3 to 40 carbon atoms, and
d) 15 to 35 weight-percent (meth)acrylic acid,
the weight-percent amounts for a), b), c), and d) adding up to 100 weight-percent, esterification catalysts being used during the esterification, and inhibitors being used to prevent premature polymerization of the (meth)acrylic acid used and its reaction products,
further processing of the condensation product A) obtained, made from (meth)acrylated polyester polyol and/or (meth)acrylated polyether polyester polyol, having hydroxyl values of 140 to 250 mg KOH/g and acid values of 0 to 15 mg KOH/g by addition into a mixture
B) consisting of:
e) 20 to 40 weight-percent of the (meth)acrylated polyester polyol and/or (meth)acrylated polyether polyester polyol, obtained through condensation of mixture A),
f) 10 to 30 weight-percent of an addition product of ε-caprolactone on hydroxyalkyl (meth)acrylate having 2 to 4 carbon atoms in the alkyl residue and/or on alkoxylated hydroxyalkyl (meth)acrylate having 2 to 18 carbon atoms in the alkyl residue,
g) 5 to 10 weight-percent 2,2-bis(hydroxymethyl)alkane monocarboxylic acids having a total of 5 to 9 carbon atoms of the general formula 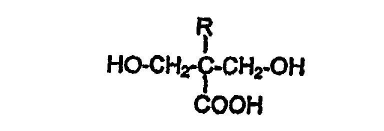 in which R stands for an alkyl residue having 1 to 5 carbon atoms, and/or their salts, obtained through partial or complete neutralization using organic amines and/or NH₃, and
h) 35 to 55 weight-percent diisocyanate and/or polyisocyanate, the weight-percent amounts for e), f), g), and h) adding up to 100 weight-percent,
C) dispersion of the addition product (prepolymer), obtained through reaction of mixture B), in 50 to 61 weight-percent water
and
D) chain lengthening of the addition product (prepolymer), obtained through reaction of mixture B) in the dispersion C), using 0.5 to 3 weight-percent of a mono-, di-, and/or polyamine, in relation to the weight of the addition product (prepolymer), obtained through reaction of mixture B).

2. The water-dispersed, radiation-curing polyurethanes according to Claim 1, wherein the(meth)acrylated polyester polyols and/or (meth)acrylated polyether polyester polyols obtained through reaction of mixture A) have molecular weights from 200 to 2000.

3. The water-dispersed, radiation-curing polyurethanes according to one of Claims 1 or 2, wherein the addition product f) is a reaction product of ε-caprolactone and 2-hydroxyethyl acrylate in a molecular ratio of 1.5:1 to 1:3.

4. The water-dispersed, radiation-curing polyurethanes according to one of Claims 1 to 3, wherein the 2,2-dimethylol propionic acid g) is provided partially and/or completely neutralized using 70 to 100 equivalent-percent triethylamine.

5. A method for producing water-dispersed, radiation-curing polyurethanes according to Claim 1, **characterized in that**
A) a mixture comprising:
a) at least 15 weight-percent aliphatic and/or cycloaliphatic diols having average molecular weights from 40 to 1000,
b) at least 15 weight-percent aliphatic and/or cycloaliphatic, and/or aromatic dicarboxylic acids or their anhydrides having 3 to 20 carbon atoms,
c) at least 15 weight-percent at least trivalent polyols and/or alkoxylated, at least trivalent, polyols having 3 to 40 carbon atoms, and
d) 15 to 35 weight-percent (meth)acrylic acid, the weight-percent amounts for a), b), c), and d) adding up to 100 weight-percent, is prepared, wherein
inhibitors being used to prevent premature polymerization of the (meth)acrylic acid used and its reaction products,
condensation is performed, through heating with water removal, until the condensation product having at least an acid value of 0 to 15 mg KOH/g and a hydroxyl value of 140 to 250 mg KOH/g is produced and the condensate solution, containing the organic water entraining means, is brought to a non-volatile proportion of at least 94 weight-percent through distillation, the esterification being performed with the aid of an esterification catalyst, after which the (meth)acrylated polyester polyol and/or (meth)acrylated polyether polyester polyol, in a mixture
B) consisting of:
e) 20 to 40 weight-percent of the(meth)acrylated polyester polyol and/or (meth)acrylated polyether polyester polyol, obtained from mixture A),
f) 10 to 30 weight-percent of an addition product of ε-caprolactone on hydroxyalkyl(meth)acrylate with 2 to 4 carbon atoms in the alkyl residue and/or on alkoxylated hydroxyalkyl(meth)acrylate with 2 to 18 carbon atoms in the alkyl residue,
g) 5 to 10 weight-percent 2,2-bis(hydroxymethyl)alkane monocarboxylic acids having a total of 5 to 9 carbon atoms of the general formula 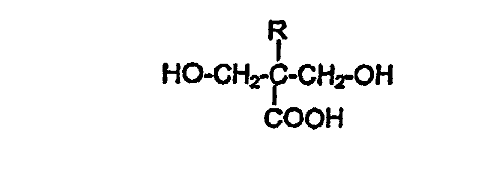 in which R stands for an alkyl residue having 1 to 5 carbon atoms, and/or their salts, obtained through partial or complete neutralization using organic amines and/or NH₃,
is/are brought to a reaction temperature between 20° and 150 °C, preferably between 40° and 90 °C, and, while maintaining the reaction temperature and with continuous movement,
h) 35 to 55 weight-percent diisocyanate and/or polyisocyanate are gradually added to this batch and kept at the reaction temperature until the content of free isocyanate groups is constant and has reached a value of 1 to 4 weight-percent, the weight-percent amounts for e), f), g), and h) adding up to 100 weight-percent and the polyurethane reaction product obtained (prepolymer) being dispersed gradually with good stirring in water heated to 30 to 50 °C, the amount of water provided being dimensioned so that it is 58 to 62 weight-percent; subsequently, the dispersion obtained has 0.5 to 3 weight-percent of a mono-, di-, and/or polyamine, in relation to the solid content of the dispersion, added to it gradually with strong stirring in the temperature range from 30 to 50 °C for chain lengthening of the dispersed addition product (prepolymer) and is kept at the reaction temperature until the total content of free isocyanate groups is at most 0.05 weight-percent.

6. A use of the water-dispersed polyurethanes according to one of Claims 1 to 4 as a binder in light-curing coatings.

7. The use according to Claim 6 for coating wood, wood-like materials such as veneer and particle board, as well as paper and cardboard, glass, metals, textiles, concrete, stone, leather, fired clay, earthenware, and porcelain.

8. The use of the water-dispersed polyurethanes as a binder according to Claim 6 or 7, for producing coatings, primers, primer and spray fillers, through application of a lacquer, based on the water-dispersed polyurethane and possibly typical additives, onto a carrier and drying of the lacquer layer obtained and irradiation at room temperature or elevated temperature up to 50 °C for radiation-chemical curing.

## Revendications

1. Polyuréthane dispersé à l'eau durcissable aux rayons, composé de polyol de polyester (méth)acrylique et/ou de polyol de polyester-polyéther (méth)acrylique, pouvant être obtenu par condensation d'un mélange consistant en :
A)
a) au moins 15 % en poids de dioles alphatiques et/ou cycloalphatiques avec des poids moléculaires moyens de 40 à 1000,
b) au moins 15 % en poids d'acides dicarboniques alphatiques, cycloalphatiques et/ou aromatiques ou de leur anhydride avec 3 à 20 atomes de carbone,
c) au moins 15 % en poids de polyols d'au moins trois valeurs et/ou de polyols alkoxylisés d'au moins trois valeurs avec 3 à 40 atomes de carbone et
d) 15 à 35 % en poids d'acide (méth)acrylique,
les indications de poids pour ab), b), c) et d) se complétant en poids jusqu'à 100 %, des catalyseurs d'estérification étant utilisés pour l'estérification et des inhibiteurs étant utilisés pour empêcher la polymérisation prématurée des acides méth(acryliques) utilisés ainsi que de leurs produits de réaction.
Poursuite de la transformation du produit de condensation obtenu A) à partir de polyol de polyester (méth)acrylique et/ou polyol de polyéther-polyester méthacrylique avec des taux d'hydroxyl de 140 à 250 mg de KOH/g et des taux d'acide de 0 à 15 mg de KOH/g par addition dans un mélange
B) consistant en :
e) 20 à 40 % en poids du polyol de polyester (méth)acrylique et/ou du polyol de polyester-polyéther méthacrylique, obtenu par condensation du mélange A),
f) 10 à 30 % en poids d'un produit additif de caprolacton ε dans de l'hydroxyalkyl(méth)acrylate avec 2 à 4 atomes de carbone dans le reste d'alkyle et/ou dans de l'hydroxyalkyl(méth)acrylate alkoxylisé avec 2 à 18 atomes de carbone dans le reste d'alkyle,
g) 5 à 10 % en poids d'acide carbonique d'(hydroxylméthyle) monoalcane 2-2 bis avec au total 5 à 9 atomes de carbone de la formule générale 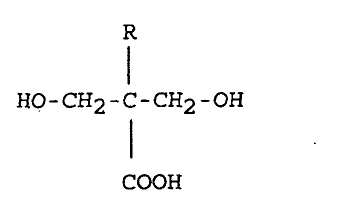 dans laquelle R représente un reste d'alkyle de 1 à 5 atomes de carbone et/ou leurs sels, obtenus par neutralisation partielle ou totale avec des amines organiques et/ou du NH₃
h) 35 à 55 % en poids de diisocyanate et/ou polyisocyanate, les indications en % pour e), f), g) et h) se complétant jusqu'à 100 %,
C) Dispersion du produit additif (prépolymère) obtenu par transposition du mélange B) dans 50 à 61 % d'eau en poids
et
D) Prolongation de chaîne du produit additif (prépolymère) obtenu par transposition du mélange B) dans la dispersion C) avec 0,5 à 3 % en poids d'un mono- et/ou polyamine, par rapport au poids du produit additif (prépolymère) obtenu par transposition du mélange B).

2. Polyuréthane dispersé à l'eau durcissable aux rayons selon la revendication 1, les polyols de polyester (méth)acrylique et/ou de polyester-polyéther (méth)acrylique obtenus par transposition du mélange A) présentant des poids moléculaires de 200 à 2000.

3. Polyuréthane dispersé à l'eau durcissable aux rayons selon une des revendications 1 à 2, le produit additif f) étant un produit de réaction de caprolacton ε et d'hydroxyéthylacrylate 2 d'un rapport moléculaire de 1 :5 à 1 :3.

4. Polyuréthane dispersé à l'eau durcissable aux rayons selon une des revendications 1 à 3, l'acide de diméthylolpropion 2,2 g) se présentant sous forme neutralisée partiellement ou totalement avec 70 à 100 % de triéthylamine en équivalent %.

5. Procédé pour la fabrication de polyuréthanes dispersés à l'eau durcissables aux rayons selon la revendication 1, **caractérisé en ce que**
A) représente un mélange consistant en
a) au moins 15 % en poids de dioles alphatiques et/ou cycloalphatiques avec des poids moléculaires moyens de 40 à 1000,
b) au moins 15 % en poids d'acides dicarboniques alphatiques et/ou cycloalphatiques et/ou aromatiques ou leur anhydril avec 3 à 20 atomes de carbone,
c) au moins 15 % en poids de polyols d'au moins trois valeurs et/ou polyols aikoxylisés d'au moins trois valeurs avec 3 à 40 atomes de carbone et
d) 15 à 35 % en poids d'acide méth(acrylique), les indications en % de poids pour a), b), c) et d) se complétant jusqu'à 100 % du poids,
des inhibiteurs étant utilisés pour empêcher la polymérisation prématurée de l'acide méth(acrylique) utilisé ainsi que de ses produits de réaction,
la condensation étant faite en éliminant l'eau par chauffage, jusqu'à ce que le produit de condensation ait un taux d'acide d'au moins 0 à 15 mg de KOH/g et un taux d'hydroxyl de 140 à 250 mg de KOH/g et que la solution organique de condensé contenant des tiers-corps d'eau soit amenée par distillation à un taux non volatile d'au moins 94 % en poids, l'estérification se faisant à l'aide d'un catalyseur d'estérification, le polyol de polyester (méth)acrylique et/ou polyol de polyester-polyéther (méth)acrylique contenu amenant ensuite, dans un mélange
B) consistant en :
e) 20 à 40 % en poids du polyol de polyester (méth)acrylique et/ou polyol de polyester-polyéther méthacrylique, obtenu à partir du mélange A),
f) 10 à 30 % en poids d'un produit additif de caprolacton ε dans de l'hydroxyalky(méth)acrylate avec 2 à 4 atomes de carbone dans le reste d'alkyle et/ou de l'hydroxyalkyl(méth)acrylate alkoxylisé avec de 2 à 18 atomes de carbone dans le reste d'alkyle,
g) 5 à 10 % en poids d'acides carboniques monoalcane (hydroxyméthyle) 2-2 bis avec au total 5 à 9 atomes de carbone de la formule générale 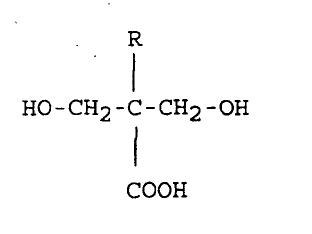 dans laquelle R représente un reste d'alkyle de 1 à 5 atomes de carbone et/ou leurs sels, obtenus par neutralisation partielle ou totale avec des amines organiques et/ou du NH₃,
à une température de réaction entre 20 °C et 150 °C, de préférence entre 40 °C et 90 °C et en rajoutant progressivement dans ce produit de départ en maintenant la température de réaction et en remuant constamment
h) 35 à 55 % en poids de diisocyanate et/ou de polyisocyanate, étant maintenu à la température de réaction jusqu'à ce que la teneur en groupes isocyanates libres soit constante et ait atteint une valeur de 1 à 4 % en poids, les indications de poids en % se complétant jusqu'à 100 % pour e), f), g) et h) et le produit de réaction de polyuréthane obtenu (prépolymère) étant dispersé progressivement en remuant bien dans de l'eau chauffée à 30 à 50 °C, la quantité d'eau étant mesurée de manière à atteindre 58 à 62 % en poids ; ensuite la dispersion obtenue est ajoutée progressivement avec 0,5 à 3 % en poids d'un mono-, di- et/ou polyamine, par rapport à la teneur en corps solide de la dispersion, en remuant vigoureusement dans une plage de température de 30 à 50 °C pour la prolongation de chaîne du produit additif (prépolymère) dispersé et maintenue à la température de réaction jusqu'à ce que la teneur totale en groupes isocyanates libres atteigne au plus 0,05 % en poids.

6. Utilisation des polyuréthanes dispersés à l'eau selon une des revendications 1 à 4 comme agglomérant dans des produits de revêtement durcissant à la lumière.

7. Utilisation selon la revendication 6 pour le revêtement de bois, matières premières similaires à du bois comme des contre-plaqués et panneaux de particules ainsi que du papier et du carton, du verre, des métaux, des textiles, du béton, de la pierre, du cuir, de la terre cuite, de la faïence, de la porcelaine.

8. Utilisation du polyuréthane dispersé à l'eau comme agglomérant selon la revendication 6 ou 7 pour la fabrication d'enduits, apprêts, bourrages d'apprêt et à injecter par application d'un vernis sur la base du polyuréthane dispersé à l'eau ainsi que le cas échéant d'additifs usuels sur un support et séchage de la couche de vernis obtenue et exposition aux rayonnements à température ambiante ou température accrue jusqu'à 50 °C pour durcissement chimique aux rayons.
